# EUROPÄISCHE PATENTSCHRIFT

(11) **EP 1 370 758 B1**
(45) Veröffentlichungstag und Bekanntmachung des Hinweises auf die Patenterteilung: **18.07.2007**
(21) Anmeldenummer: 02727400.0
(22) Anmeldetag: 12.03.2002
(51) Int. Cl.: F02D 41/06, F02D 41/02, F02P 5/15, F02D 21/08

(54) **VERFAHREN ZUR STEUERUNG EINES WARMLAUFS EINES KATALYSATORSYSTEMS**
METHOD FOR CONTROLLING THE WARM-UP PROCESS OF A CATALYTIC CONVERTER SYSTEM
PROCEDE PERMETTANT DE COMMANDER L'OPERATION DE CHAUFFAGE D'UN SYSTEME CATALYTIQUE

(30) Priorität: 12.03.2001 DE 10112938
(43) Veröffentlichungstag der Anmeldung: 17.12.2003
(73) Patentinhaber: Volkswagen Aktiengesellschaft, 38436 Wolfsburg (DE); Umicore AG & Co. KG, 63457 Hanau-Wolfgang (DE)
(72) Erfinder: POTT, Ekkehard, 38518 Gifhorn (DE); ZILLMER, Michael, 38173 Sickte (DE); GÖBEL, Ulrich, 65795 Hattersheim (DE)
(74) Vertreter: Schneider, Henry
(86) Internationale Anmeldenummer: PCT/EP2002/002701
(87) Internationale Veröffentlichungsnummer: WO 2002/073018

(56) Entgegenhaltungen:
- EP-A- 0 987 420
- DE-A- 19 913 316
- DE-A- 19 929 513
- US-A- 5 613 360

## Beschreibung

Die Erfindung betrifft ein Verfahren zur Steuerung eines Warmlaufs eines einer Verbrennungskraftmaschine nachgeschalteten Katalysatorsystems, welches mindestens einen Vorkatalysator und einen diesem nachgeschalteten Hauptkatalysator umfasst.

Zur Reinigung von Abgasen von Verbrennungskraftmaschinen ist bekannt, Katalysatoren einzusetzen, die eine Konvertierung von Schadstoffen des Abgases in umweltneutrale Verbindungen vornehmen. 3-Wege-Katalysatoren sind in der Lage, gleichzeitig die Oxidation von unverbrannten Kohlenwasserstoffen HC und Kohlenmonoxid CO sowie die Reduktion von Stickoxiden NOₓ unter stöchiometrischen Luft-Kraftstoff-Verhältnissen mit Lambda = 1 zu katalysieren. So genannte NOₓ-Speicherkatalysatoren werden eingesetzt, um insbesondere bei magerlauffähigen Verbrennungskraftmaschinen die Emission von Stickoxiden NOₓ bei mageren Luft-Kraftstoff-Verhältnissen mit Lambda > 1 zu reduzieren.

Ihre volle Betriebsfähigkeit, bei der die Schadstoffkonvertierung mit einem ausreichenden Wirkungsgrad erfolgt, erreichen Katalysatoren erst, nachdem sie ihre Anspring- oder Light-off-Temperatur angenommen haben. Daher gelangt ein Großteil der nach einem Motorkaltstart erzeugten Schadstoffe unkonvertiert in die Atmosphäre. Um eine Emissionsminderung während der Warmlaufphase zu erzielen, werden kleinvolumige Vorkatalysatoren eingesetzt, die an einer motornahen Position der Abgasanlage angeordnet werden. Diese erreichen wegen ihrer geringen thermischen Masse und ihrer motornahen Lage relativ schnell ihre Anspringtemperatur und überbrücken damit die Zeitspanne, bis auch der weiter stromab angeordnete, großvolumige Hauptkatalysator seine Betriebstemperatur erreicht hat. Um die Aufheizung des Vorkatalysators und damit sein Anspringen zu beschleunigen, ist bei Ottomotoren bekannt, durch Spätverstellung eines Zündwinkels (Spätzündung) einen Motorwirkungsgrad zu verringern und dabei die Abgastemperatur anzuheben. Ferner ist bekannt, eine derartige Katalysatorheizmaßnahme nicht bei einer stöchiometrischen Abgaszusammensetzung mit Lambda = 1, sondern bei leicht magerem Abgas mit Lambda > 1, üblicherweise bei Lambda = 1,05, durchzuführen. Diese Maßnahme trägt dem Umstand Rechnung, dass die Anspringtemperatur für die HC- und CO-Konvertierung aufgrund des Sauerstoffüberschusses im mageren Abgas um etwa 50 bis 100 K niedriger liegt als im stöchiometrischen Abgas. Effektiv setzt daher bei Magerbeaufschlagung die Schadstoffkonvertierung früher ein. Durch die Magerbeaufschlagung wird allerdings ein gewisser NOₓ-Durchbruch in Kauf genommen, da mit 3-Wege-Katalysatorsystemen nur bei einer exakt stöchiometrischen Abgasatmosphäre eine vollständige NOₓ-Reduzierung erfolgt und im Falle von NOₓ-Speicherkatalysatoren diese ihre Arbeitstemperatur bezüglich einer NOₓ-Speicherung ebenfalls noch nicht erreicht haben.

In gegenwärtigen Verfahren erfolgt das Katalysatorheizen über Spätzündung und leicht magerer Abgasatmosphäre, beispielsweise im Neuen Europäischen Fahrzyklus (NEFZ) für einen Zeitraum von etwa 20 bis 60 s nach Motorstart, ehe die Verbrennungskraftmaschine in den üblichen Lambda=1-Modus umgeschaltet wird. Im Falle schichtladefähiger, magerlauffähiger Ottomotoren wird der magere Schichtbetrieb üblicherweise nach 150 bis 400 s nach Motorstart im NEFZ zugelassen. In jedem Fall hat der Hauptkatalysator am Ende der Katalysatorheizmaßnahme seine Anspringtemperatur noch nicht erreicht. Zum beschleunigten Aufheizen des Hauptkatalysators wäre wegen seiner großen thermischen Masse und wegen Wärmeverlusten im Abgaskanal eine deutlich längere Katalysatorheizdauer, verbunden mit einem entsprechenden Kraftstoffmehrverbrauch, erforderlich, ohne eine nennenswerte Emissionsminderung zu erzielen. Somit leistet der Vorkatalysator bis zum Anspringen des Hauptkatalysators alleine nahezu die gesamte Konvertierungsleistung des Abgassystems. Bei hohen Motorlasten mit höheren Abgasmassenströmen, insbesondere in Beschleunigungsphasen, wird der Vorkatalysator zumindest teilweise überlaufen, so dass bis zum Anspringen des Hauptkatalysators ein gewisser Schadstoffdurchbruch zu verzeichnen ist.

Aus DE 199 13 316 A ist ein Verfahren zum Aufheizen eines aus Vorkatalysator und Hautkatalysator bestehenden Katalysatorsystems bekannt, wobei während des Betriebs der Verbrennungskraftmaschine mit einem leicht mageren Luftkraftstoffgemisch verschiedene Heizmaßnahmen (Spätzündung, innere Abgasrückführung und Vorverlegung des Abgasauslasses) solange aufrecht erhalten werden, bis die Katalysatoren aktiviert sind.

Aufgabe der vorliegenden Erfindung ist es daher, ein Verfahren zur Steuerung eines Warmlaufs eines Katalysatorsystems zur Verfügung zu stellen, welches gegenüber dem gegenwärtigen Stand der Technik eine stärkere Schadstoffreduzierung erzielt. Das Verfahren sollte insbesondere nicht mit einem erhöhten Mehrverbrauch belastet sein.

Diese Aufgabe wird durch Verfahren mit den Merkmalen des Anspruchs 1 gelöst. Erfindungsgemäß ist vorgesehen, dass
(a) in einer Aufheizphase ein aktives Katalysatorheizen durch Anhebung einer Abgastemperatur mittels motorischer Maßnahmen bei einer Beaufschlagung des Katalysatorsystems mit einer mageren Abgasatmosphäre mit Lambda > 1 durchgeführt wird, bis eine Temperatur des Vorkatalysators zumindest annähernd eine Anspringtemperatur bei Lambda = 1 (LO_{λ=1}) erreicht hat, und
(b) in einer unmittelbar anschließenden oder zeitlich abgesetzten Magerphase eine Beaufschlagung des Katalysatorsystems mit einer mageren Abgasatmosphäre mit Lambda > 1 durchgeführt wird, bis eine Temperatur des Hauptkatalysators zumindest annähernd die Anspringtemperatur bei Lambda = 1 (LO_{λ=1}) erreicht hat.

Dabei entspricht die Aufheizphase in ihren wesentlichen Merkmalen, nämlich Anhebung der Abgastemperatur sowie Beaufschlagung mit einer mageren Abgasatmosphäre, derzeit üblichen Verfahren. Die motorischen Maßnahmen zur Anhebung der Abgastemperatur können dabei insbesondere in einer Spätzündung bestehen und/oder in einer Reduzierung einer Abgasrückführrate gegenüber einem nach Beendigung der Warmlaufphase einzustellenden Betriebsmodus. Erfindungsgemäß folgt dieser Aufheizphase eine Magerphase, in der die magere Abgasatmosphäre aufrecht erhalten wird, bis auch der Hauptkatalysator seine Anspringtemperatur erreicht hat oder sich nahe an dieser befindet. Das erfindungsgemäße Vorgehen nutzt somit die Vorteile einer niedrigeren Anspringtemperatur bezüglich einer HC- und CO-Konvertierung bei magerer Abgasbeaufschlagung gegenüber stöchiometrischer Beaufschlagung auch am Hauptkatalysator. Während eines Zeitfensters zwischen dem Erreichen der Mager-Anspringtemperatur und der Lambda=1-Anspringtemperatur wird auf diese Weise eine signifikante Reduzierung der HC- und CO-Schadstoffemission erzielt.

Dabei erfolgt während der Aufheiz- und/oder der Magerphase die Beaufschlagung des Katalysatorsystems mit einem leicht mageren Lambda von 1,005 bis 1,2. Vorzugsweise beträgt der Lambdawert 1,01 bis 1,07, insbesondere 1,01 bis 1,03. Im Falle eines NOₓ-Speicherkatalysators als Hauptkatalysator kann es unter bestimmten, noch zu erläuternden Umständen überdies sinnvoll sein, die Lambdavorgabe in der Magerphase auf Werte oberhalb von 1,05, vorzugsweise auf Werte zwischen 1,1 und 1,15, zu bestimmen.

Die Beendigung der Magerphase und damit des Warmlaufs, verbunden mit der Umschaltung der Verbrennungskraftmaschine in einen regulären Betriebsmodus, kann auf verschiedene Weise erfolgen. In der einfachsten Ausführung kann für die für das Erreichen der Anspringtemperatur bei Lambda = 1 durch den Hauptkatalysator erforderliche Zeit ein fester Zeitraum nach Motorstart oder nach Beendigung der Aufheizphase vorgegeben werden. Eine alternative Ausgestaltung des Verfahrens sieht vor, einen kumulierten Wärmestromeintrag in das Katalysatorsystem zu modellieren und die Magerphase zu beenden, wenn eine vorgebbare Wärmestromschwelle überschritten wird. Nach einer weiteren Alternative kann die Temperatur des Hauptkatalysators selbst ermittelt werden und die Magerphase bei Überschreiten einer vorgebbaren Temperaturschwelle durch die Hauptkatalysatortemperatur abgebrochen werden. Die Ermittlung der Temperatur des Hauptkatalysators kann entweder mit Hilfe von Temperatursensoren, die vor, im oder nach dem Hauptkatalysator angeordnet sein können, erfolgen oder durch Modellierung anhand von aktuellen Betriebsparametern der Verbrennungskraftmaschine, wobei dies ebenfalls mit Unterstützung durch Temperatursensoren erfolgen kann.

Unabhängig davon, nach welchem der vorbeschriebenen Verfahren das Erreichen der Lambda=1-Anspringtemperatur des Hauptkatalysators erkannt wird, ist besonders vorteilhaft vorgesehen, die Magerphase um eine vorgebbare Zeitspanne vor diesem Erreichen zu beenden. Durch die somit erfolgende Verkürzung der Magerphase wird eine durch den Magerbetrieb verursachte NOₓ-Emission reduziert.

Eine weitere Verminderung der NOₓ-Emission kann erreicht werden, indem eine interne oder externe Abgasrückführrate während der Magerphase angehoben wird. Durch diese Maßnahme wird die Verbrennungstemperatur gesenkt und die NOₓ-Rohemission erniedrigt. In diesem Zusammenhang kann es zweckmäßig sein, Zündzeitpunkt und Stellung von Nockenwelle und gegebenenfalls einer Ladungsbewegungsklappe anzupassen, um Momentenschwankungen zu vermindern und insgesamt eine bessere Laufruhe zu gewährleisten.

Nach einer erfindungsgemäßen Weiterentwicklung des Verfahrens erfolgt zwischen der Aufheizphase und der Magerphase in einer weiteren Phase eine Beaufschlagung des Katalysatorsystems mit einer stöchiometrischen Abgasatmosphäre mit Lambda = 1 so lange, bis der Hauptkatalysator zumindest annähernd seine Anspringtemperatur bei Lambda > 1 erreicht hat. Hierdurch wird eine weitere Verringerung der NOₓ-Emission erzielt. Alternativ kann sich diese Phase auch unmittelbar dem Motorstart anschließen und somit die Aufheizphase ersetzen.

Weitere vorteilhafte Ausgestaltungen des Verfahrens sind Gegenstand der übrigen Unteransprüche.

Die Erfindung wird nachfolgend in Ausführungsbeispielen anhand der zugehörigen Zeichnungen näher erläutert. Es zeigen:
- Figur 1: schematisch eine Verbrennungskraftmaschine mit nachgeschalteter Abgasanlage;
- Figur 2: einen zeitlichen Lambdaverlauf und Temperaturverläufe von Vor- und Hauptkatalysator im Neuen Europäischen Fahrzyklus (NEFZ) gemäß einem Verfahren zur Warmlaufsteuerung nach dem Stand der Technik;
- Figur 3: zeitliche Temperatur- und Lambdaverläufe im NEFZ gemäß einer ersten Ausgestaltung des erfindungsgemäßen Verfahrens zur Warmlaufsteuerung;
- Figur 4: zeitliche Temperatur- und Lambdaverläufe gemäß einer zweiten Ausgestaltung des erfindungsgemäßen Verfahrens;
- Figur 5: zeitliche Temperatur- und Lambdaverläufe gemäß einer dritten Ausgestaltung des erfindungsgemäßen Verfahrens;
- Figur 6: zeitliche Temperatur- und Lambdaverläufe gemäß einer vierten Ausgestaltung des erfindungsgemäßen Verfahrens;
- Figur 7: zeitliche Temperatur- und Lambdaverläufe gemäß einer fünften Ausgestaltung des erfindungsgemäßen Verfahrens und
- Figur 8: zeitliche Temperatur- und Lambdaverläufe gemäß einer sechsten Ausgestaltung des erfindungsgemäßen Verfahrens.

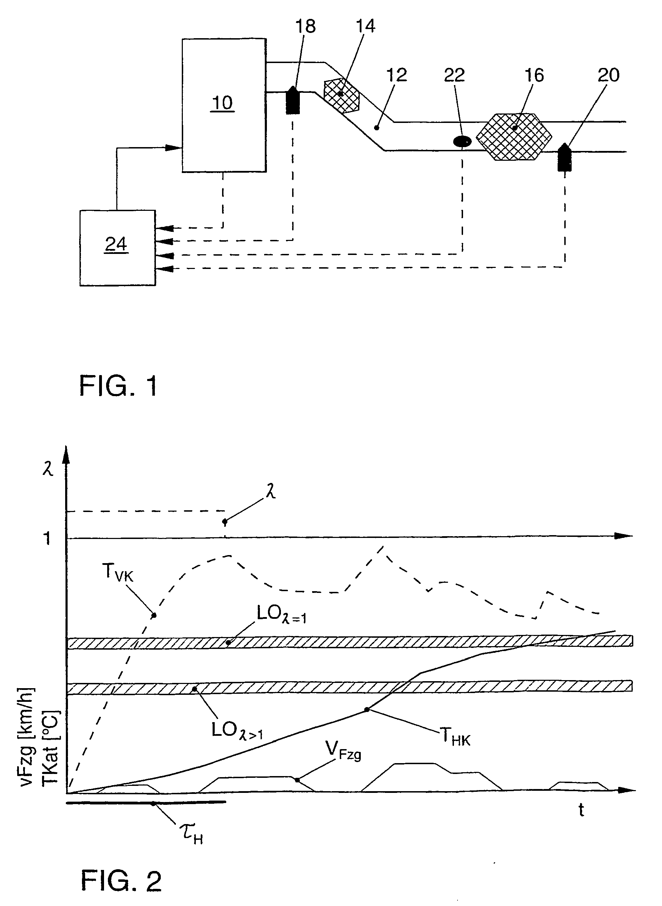

Figur 1 zeigt in schematischer Darstellung eine Verbrennungskraftmaschine 10 mit einem nachgeschalteten Abgaskanal 12. Zur Reinigung eines von der Verbrennungskraftmaschine 10 produzierten Abgases beherbergt der Abgaskanal 12 an einer motornahen Position einen kleinvolumigen Vorkatalysator 14 sowie stromab von diesem einen typischerweise in einer Unterbodenposition angeordneten, großvolumigen Hauptkatalysator 16. Beide Katalysatoren 14, 16 können als Oxidations- oder 3-Wege-Katalysatoren ausgestaltet sein. Der Hauptkatalysator 16 kann jedoch auch, insbesondere im Falle einer magerlauffähigen Verbrennungskraftmaschine 10, ein NOₓ-Speicherkatalysator sein. Eine Steuerung des Betriebsmodus der Verbrennungskraftmaschine 10, insbesondere eines Luft-Kraftstoff-Verhältnisses Lambda, einer Abgasrückführrate, eines Zündwinkels und gegebenenfalls eines Einspritzwinkels, erfolgt in Abhängigkeit von Signalen verschiedener im Abgaskanal 12 installierter Sensoren. Diese umfassen eine Lambdasonde 18 zur Regelung des Verbrennungslambdas sowie einen Gassensor 20, der als NOₓ-Sensor oder ebenfalls als Lambdasonde ausgestaltet sein kann und der Überwachung des Hauptkatalysators 16 dient. Stromauf des Hauptkatalysators 16 ist ein Temperatursensor 22 im Abgaskanal 12 angeordnet und dient der Ermittlung der Temperatur des Hauptkatalysators 16. Diese kann jedoch auch durch anderenorts, beispielsweise im Hauptkatalysator 16, angeordnete Temperatursensoren ermittelt oder rechnerisch modelliert werden. Die Sensorsignale sowie ausgewählte Betriebsparameter der Verbrennungskraftmaschine finden Eingang in ein Motorsteuergerät 24, welches die Daten verarbeitet und anhand abgespeicherter Algorithmen und Kennfelder die Steuerung der Verbrennungskraftmaschine 10 vornimmt. Wie bereits eingangs erläutert wurde, erfolgt eine ausreichende Konvertierung von Schadstoffen des Abgases erst, nachdem die Katalysatoren 14, 16 eine katalysatorspezifische Anspringtemperatur erreicht haben.

Ein dem Stand der Technik entsprechendes herkömmliches Verfahren zur Steuerung des Warmlaufs des Katalysatorsystems 14, 16 stellt Figur 2 dar. Der Verlauf der Fahrzeuggeschwindigkeit V_{Fzg} entspricht den Vorgaben des Neuen Europäischen Fahrzyklus NEFZ. Beginnend nach einem Motorstart bei einer Temperatur von 20 °C wird zunächst während einer Aufheizphase τ_{H} ein aktives Katalysatorheizen mittels Spätzündung durchgeführt. Entsprechend einer hierdurch erhöhten Abgastemperatur steigt die Temperatur T_{VK} des Vorkatalysators 14 zunächst sehr schnell an. Sie erreicht zunächst eine Mager-Anspringtemperatur LO_{λ>1}, die typischerweise bei einer Temperatur von 200 bis 250 °C liegt. Eine zweite Anspringtemperatur bei stöchiometrischer Abgasatmosphäre LO_{λ=1} beträgt ungefähr 300 °C und wird folglich erst zu einem etwas späteren Zeitpunkt von der Vorkatalysatortemperatur T_{VK} erreicht. Um das frühere Erreichen der Mager-Anspringtemperatur LO_{λ>1} zu nutzen, wird das Katalysatorsystem 14, 16 während der Aufheizphase τ_{H} mit einer leicht mageren Abgasatmosphäre, typischerweise mit einem Lambda von zirka 1,05, beaufschlagt. Die Dauer der aktiven Katalysatorheizung durch Spätzündung und der Beaufschlagung des Katalysatorsystems 14, 16 mit der leicht mageren Abgasatmosphäre ist dabei so ausgelegt, dass die Temperatur T_{VK} des Vorkatalysators 14 die Anspringtemperatur bei Lambda = 1 (LO_{λ=1}) erreicht. Wenn anschließend die Verbrennungskraftmaschine 10 auf den stöchiometrischen Betriebsmodus mit Lambda = 1,00 umgeschaltet wird, hat die Temperatur T_{HK} des Hauptkatalysators 16 weder die Anspringtemperatur LO_{λ>1} noch LO_{λ=1} erreicht. Folglich leistet bis zum Anspringen des Hauptkatalysators 16 der Vorkatalysator 14 die gesamte Konvertierungsleistung. Treten in diesem Zeitfenster hohe Motorlasten, insbesondere bei Beschleunigungsfahrten, und hohe Abgasmassenströme auf, wird der Vorkatalysator 14 teilweise überlaufen, so dass Schadstoffdurchbrüche verzeichnet werden.

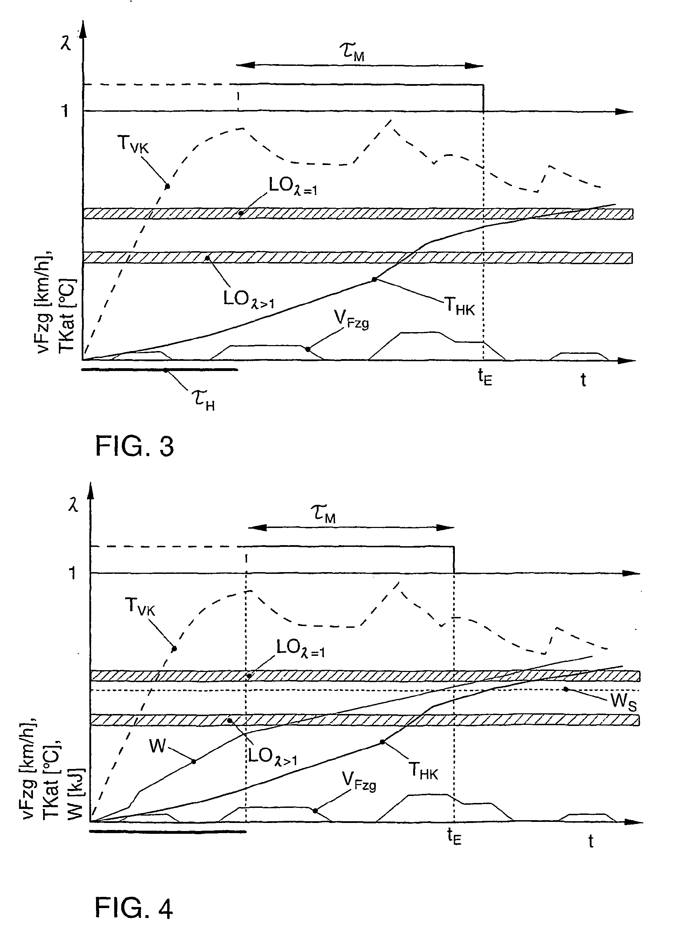

Um diese Schadstoffdurchbrüche während des Warmlaufs des Katalysatorsystems 14, 16 - zu reduzieren, ist erfindungsgemäß vorgesehen, im Anschluss an die aktive Aufheizphase τ_{H} eine Magerphase τ_{M} durchzuführen, in der das Katalysatorsystem 14, 16 mit einer leicht mageren Abgasatmosphäre, vorzugsweise mit Lambda = 1,01 bis 1,03, so lange beaufschlagt wird, bis die Temperatur T_{HK} des Hauptkatalysators 16 zumindest nahezu die Anspringtemperatur bei Lambda = 1 (LO_{λ=1}) erreicht hat. In der einfachsten Ausführung des Verfahrens, die in Figur 3 dargestellt ist, wird für die Dauer der Magerphase τ_{M} ein Festwert vorgegeben, so dass nach Ablauf dieser Dauer zum Zeitpunkt t_{E} der Warmlauf abgebrochen wird und die Verbrennungskraftmaschine 10 in ihren normalen Betriebsmodus, hier bei Lambda = 1,00, umgeschaltet wird. Dabei wird die Dauer der Magerphase τ_{M} derart bemessen, dass bei Vorliegen durchschnittlicher Motorlasten nach Start eine Temperatur T_{HK} des Hauptkatalysators 16 zumindest nahe der Lambda=1-Anspringtemperatur (LO_{λ=1}) erwartet werden kann. Wie an den Temperaturverläufen T_{VK}, T_{HK}, die mit denen aus Figur 2 gemäß dem Stand der Technik übereinstimmen, erkennbar ist, führt die zusätzliche Magerphase τ_{M} zu keiner signifikant abweichenden Abgastemperatur und somit zu keinem veränderten Aufheizverhalten der Katalysatoren 14, 16. Der Vorteil der erfindungsgemäßen Magerphase τ_{M} ist darin zu sehen, dass in dem Zeitfenster, in dem die Hauptkatalysatortemperatur T_{HK} bereits die Mager-Anspringtemperatur LO_{λ>1}, jedoch nicht die Anspringtemperatur unter stöchiometrischen Abgasbedingungen LO_{λ=1} erreicht hat, bereits eine HC- und CO-Konvertierung am Hauptkatalysator 16 genutzt werden kann. Somit wird in Betriebssituationen, in denen die verhältnismäßig geringe Konvertierungskapazität des Vorkatalysators 14 überlaufen wird, eine deutliche Verringerung der Schadstoffemission erzielt.

Eine genauere Methode zur Ermittlung des Endes der Magerphase τ_{M}, die tatsächlich vorliegende Betriebsbedingungen während des Warmlaufs berücksichtigt, zeigt Figur 4. Hier wird auf an sich bekannte Weise ein Wärmestromeintrag W in Abhängigkeit aktueller Betriebsparameter der Verbrennungskraftmaschine 10, wie Motorlast und Drehzahl, ermittelt. Die Magerphase τ_{M} wird beendet, wenn der kumulierte Wärmestromeintrag W eine vorgegebene Wärmestromschwelle W_{S} überschreitet. Dabei korreliert die Wärmestromschwelle W_{S} wiederum mit einer sich zumindest nahe an der Anspringtemperatur LO_{λ=1} befindenden Temperatur T_{HK} des Hauptkatalysators 16. Der Vorteil der in Figur 4 dargestellten Ausführung des Verfahrens besteht in einer flexiblen Anpassung der Dauer der Magerphase τ_{M} an die aktuellen Betriebsbedingungen. Wird das Fahrzeug unmittelbar nach Motorstart im Hochlastbetrieb mit hohen Abgastemperaturen und Abgasmassenströmen eingesetzt, wird ein verhältnismäßig rascher Anstieg des Wärmestromeintrags W ermittelt, resultierend in einer verkürzten Dauer der Magerphase τ_{M}. Umgekehrt wird sich bei Betrieb des Fahrzeugs im Niedriglastbereich eine relativ lange Warmlaufphase ergeben.

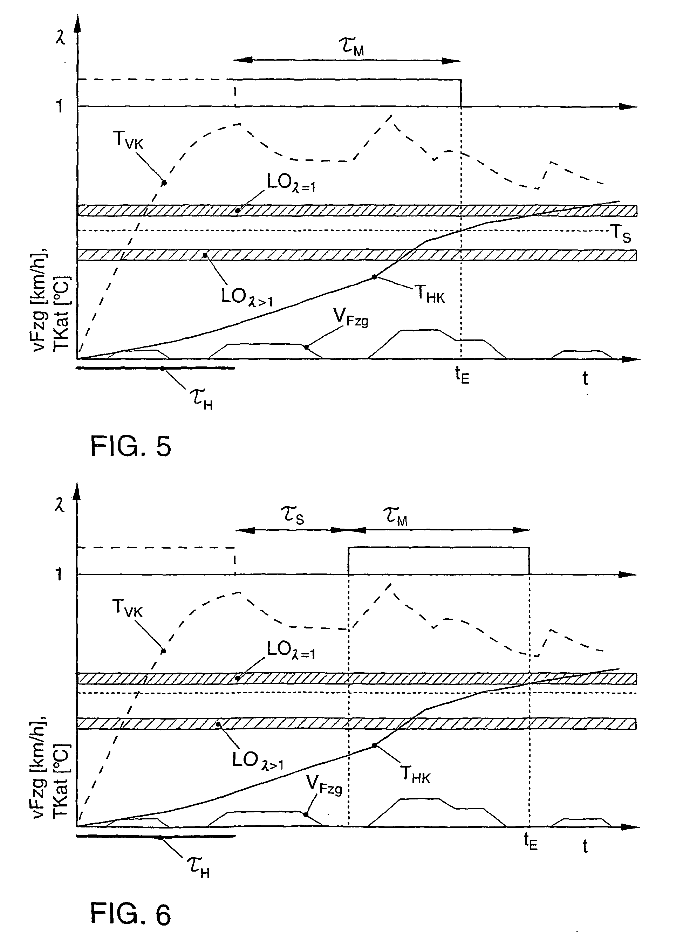

Eine weitere, in Figur 5 dargestellte Methode bestimmt den Abbruch der Magerphase τ_{M} gemäß einer gemessenen oder modellierten Temperatur T_{HK} des Hauptkatalysators 16. Überschreitet diese eine vorgegebene Temperaturschwelle T_{S}, die wiederum zumindest nahe der stöchiometrischen Anspringtemperatur LO_{λ=1} liegt, wird das Umschalten der Verbrennungskraftmaschine 10 in den Lambda=1-Betrieb ausgelöst. Anstelle der Katalysatortemperaturschwelle T_{S} kann auch eine Temperaturschwelle für eine Abgastemperatur vorgegeben werden. Die Modellierung der Katalysatortemperatur T_{HK} anhand aktueller Betriebsparameter, in die gegebenenfalls auch mit Hilfe von Temperatursensoren gemessene Abgastemperaturen einfließen können, ist bekannt und wird hier nicht näher erläutert. Ähnlich der Bestimmung des Warmlaufendes t_{E} anhand des ermittelten Wärmestromeintrags (vgl. Fig. 4) besteht auch hier der Vorteil in der Berücksichtigung tatsächlich vorherrschender Betriebsparameter.

Eine weitere erfindungsgemäße Verfahrensausgestaltung zeigt Figur 6. Hier wird die Magerphase τ_{M} nicht unmittelbar nach Beendigung der Aufheizphase τ_{H} eingeleitet, sondern nach einer weiteren Phase τ_{S}, in der das Katalysatorsystem 14, 16 mit einer stöchiometrischen Abgasatmosphäre mit Lambda = 1,00 beaufschlagt wird. Die stöchiometrische Phase τ_{S} wird dabei so lange aufrecht erhalten, bis die Hauptkatalysatortemperatur T_{HK} eine vorgebbare Schwelle erreicht, die annähernd der Mageranspringtemperatur LO_{λ>1} entspricht oder vorzugsweise etwas unterhalb dieser liegt. Insbesondere entspricht die Schwelle einer Hauptkatalysatortemperatur T_{HK} von 170 bis 300 °C, vorzugsweise von 220 bis 270 °C. Das Erreichen dieser Temperatur kann entsprechend der vorstehend ausgeführten Verfahren mittels einer fest vorgegebenen Zeitdauer, des ermittelten Wärmestromeintrages oder der gemessenen oder modellierten Hauptkatalysatortemperatur T_{HK} erfasst werden. Bei Überschreiten der Schwelle wird in die Magerphase τ_{M} gewechselt, die wiederum gemäß einer der vorstehend beschriebenen Methoden beendet wird. Dieses Verfahren führt insgesamt zu einer Verkürzung der Magerphase τ_{M} und trägt somit dem Umstand Rechnung, dass selbst bei lediglich leicht mageren Abgaswerten Stickoxide in einem stöchiometrischen Überschuss entstehen, die katalytisch nicht abgebaut werden können und somit einen gewissen NOₓ-Durchbruch verursachen. Selbst im Falle eines als NOₓ-Speicherkatalysator ausgestalteten Hauptkatalysators 16 können diese, am Vorkatalysator nicht konvertierten Stickoxide in dieser Phase nicht eingelagert werden, da die hierfür erforderlichen Katalysatortemperaturen oberhalb von 220 °C weitgehend noch nicht vorliegen. Da nach Beendigung der Aufheizphase τ_{H} der Hauptkatalysator 16 noch nicht einmal seine Mager-Anspringtemperatur LO_{λ>1} erreicht hat und er somit in dieser Phase ohnehin nicht unterstützend bei der HC- und CO-Konvertierung wirken kann, wird die Zeit bis zu seinem Anspringen durch die stöchiometrische Abgasbeaufschlagung, in der kein O₂- und NOₓ-Überschuss vorhanden ist, überbrückt. Gegenüber den vorausgehend beschriebenen Verfahrensvarianten kann somit während der Phase τ_{S} die NOₓ-Emission reduziert werden.

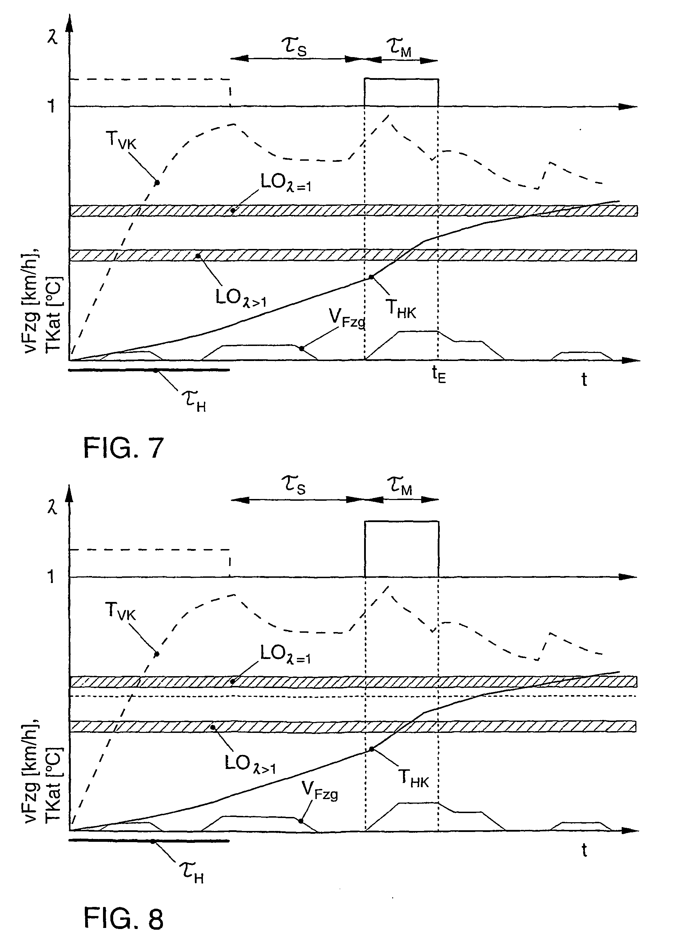

Gemäß einer weiteren Ausgestaltung des Verfahrens wird die Magerphase τ_{M} auf Betriebsphasen mit hohen HC-Rohemissionen der Verbrennungskraftmaschine 10 und/oder hohen Raumgeschwindigkeiten des Abgases beschränkt (Fig. 7). Hierfür kann für die Motorlast und/oder für eine Motordrehzahl eine Schwelle vorgegeben werden, bei deren Unterschreitung die Magerbeaufschlagung während der Magerphase τ_{M} unterdrückt wird und die Verbrennungskraftmaschine 10 mit einem stöchiometrischen Luft-Kraftstoff-Verhältnis mit Lambda = 1 betrieben wird. Auf diese Weise wird nur dann auf die Unterstützung des Hauptkatalysators 16 bezüglich der HC- und CO-Konvertierung zurückgegriffen, wenn dies betriebspunktabhängig erforderlich ist. Entsprechend muss auch nur in dieser begrenzten Phase ein geringer NOₓ-Durchbruch in Kauf genommen werden, woraus sich eine weitere Verminderung der NOₓ-Emission gegenüber der in Figur 6 dargestellten Ausführung ergibt.

Eine weitere, in Figur 8 gezeigte Ausführung des Verfahrens berücksichtigt ein Problem von NOₓ-Speicherkatalysatoren, das darin besteht, dass bei nur leicht magerem Abgas, etwa bei Lambda ≤ 1,05 und unter bestimmten weiteren Umständen eine Konkurrenz von NOₓ-Einlagerung und Nitratzerfall ohne anschließende NOₓ-Konvertierung beobachtet wird. Daher kann vorteilhafterweise speziell für NOₓ-Speicherkatalysatoren vorgesehen sein, abhängig von der Abgaszusammensetzung, von der Temperatur T_{HK} des NOₓ-Speicherkatalysators des Abgasmassenstroms und/oder der NOₓ-Rohemission die Lambdavorgabe in der Magerphase τ_{M} auf Werte oberhalb von 1,05, vorzugsweise auf Lambda = 1,1 bis 1,15, anzuheben. Damit wird aufgrund des hohen Sauerstoffüberschusses der Nitratzerfall ohne anschließende NOₓ-Konvertierung zumindest weitgehend unterdrückt.

Zusätzlich kann bei allen beschriebenen Verfahren durch Anhebung der Abgasrückführrate eine weitere Minderung der NOₓ-Rohemission der Verbrennungskraftmaschine erzielt werden. Dies kann sowohl durch weitere Öffnung eines AGR-Ventils in einer AGR-Leitung (externer AGR) als auch durch Veränderung von Ventilüberschneidungen von Ein- und Auslassventilen der Zylinder (interne AGR) erreicht werden. Vorzugsweise wird die AGR-Rate um einen Faktor 1,1 bis 2,5, optimal um einen Faktor 1,3 bis 1,6, gegenüber üblichen homogenen Applikationen (10 bis 30 % AGR-Rate) angehoben.

Zur Vermeidung von Fahrverhaltensproblemen kann die Anhebung der AGR-Rate von einer Laufruhe beziehungsweise einer Laufunruhe der Verbrennungskraftmaschine abhängig gemacht werden. Dazu wird die AGR-Rate während der Magerphase τ_{M} schrittweise oder stufenlos so lange angehoben, bis eine vorgebbare maximale Soll-AGR-Rate überschritten wird oder bis eine durch Anhebung der AGR-Rate bedingte Zunahme der Laufunruhe eine vorgebbare Schwelle überschreiet. In diesem Fall kann die AGR-Rate zunächst zurückgenommen werden. Anschließend kann erneut eine Anhebung der AGR-Rate erfolgen, um während der Magerphase τ_{M} eine motorindividuelle maximale AGR-Rate fahren zu können. Bei Unterschreiten einer laufunruheabhängigen minimalen AGR-Zunahme kann die Magerbeaufschlagung unterdrückt werden.

Insgesamt wird durch das erfindungsgemäße Verfahren in einfacher Weise und ohne dass ein Kraftstoffmehrverbrauch in Kauf genommen werden muss, eine Emission von unverbrannten Kohlenwasserstoffen HC und Kohlenmonoxid CO während der Warmlaufphase eines Katalysatorsystems reduziert. Die verschiedenen vorteilhaften Ausführungsbeispiele ermöglichen dabei, eine NOₓ-Mehremission - abgestimmt auf die vorliegende Betriebssituation - zu minimieren. Das Verfahren lässt sich mit sehr geringem Aufwand in übliche Motorsteuerungen integrieren.

### BEZUGSZEICHENLISTE

- 10: Verbrennungskraftmaschine
- 12: Abgaskanal
- 14: Vorkatalysator
- 16: Hauptkatalysator
- 18: Lambdasonde
- 20: NOₓ-Sensor oder Lambdasonde
- 22: Temperatursensor
- 24: Motorsteuergerät

- λ: Luft-Kraftstoff-Verhältnis Lambda
- LO_{λ=1}: Anspringtemperatur bei Lambda = 1
- LO_{λ>1}: Anspringtemperatur bei Lambda > 1
- t: Zeit
- t_{E}: Warmlaufende
- T_{Kat}: Katalysatortemperatur
- T_{VK}: Vorkatalysatortemperatur
- T_{HK}: Hauptkatalysatortemperatur
- τ_{H}: Aufheizphase
- τ_{M}: Magerphase
- τ_{S}: stöchiometrische Phase
- V_{Fzg}: Fahrzeuggeschwindigkeit
- W: kumulierter Wärmestromeintrag
- W_{S}: Wärmestromschwelle

## Patentansprüche

1. Verfahren zur Steuerung eines Warmlaufs eines einer Verbrennungskraftmaschine (10) nachgeschalteten Katalysatorsystems (14, 16), mindestens bestehend aus einem Vorkatalysator (14) und einem diesem nachgeschalteten Hauptkatalysator (16), wobei
(a) in einer Aufheizphase (τ_{H}) ein aktives Katalysatorheizen durch Anhebung einer Abgastemperatur mittels motorischer Maßnahmen bei einer Beaufschlagung des Katalysatorsystems (14, 16) mit einer mageren Abgasatmosphäre mit Lambda > 1 durchgeführt wird, bis eine Temperatur (T_{VK}) des Vorkatalysators (14) zumindest annähernd eine Anspringtemperatur bei Lambda = 1 (LO_{λ=1}) erreicht hat, und
(b) in einer Magerphase (τ_{M}) eine Beaufschlagung des Katalysatorsystems (14, 16) mit einer mageren Abgasatmosphäre mit Lambda > 1 durchgeführt wird, bis eine Temperatur (T_{HK}) des Hauptkatalysators (16) zumindest annähernd die Anspringtemperatur bei Lambda = 1 (LO_{λ=1}) erreicht hat.

2. Verfahren nach Anspruch 1, **dadurch gekennzeichnet, dass** in einer sich dem Motorstart oder der Aufheizphase (τ_{H}) anschließenden Phase (τ_{S}) das Katalysatorsystem (14, 16) mit einer stöchiometrischen Abgasatmosphäre mit Lambda = 1 beaufschlagt wird, bis der Hauptkatalysator (16) zumindest annähernd eine Anspringtemperatur bei Lambda > 1 (LO_{λ>1}) erreicht hat.

3. Verfahren nach Anspruch 1 oder 2, **dadurch gekennzeichnet, dass** während der Aufheizphase (τ_{H}) und/oder der Magerphase (τ_{M}) die Beaufschlagung des Katalysatorsystems (14, 16) mit einem Lambda von 1,005 bis 1,2 erfolgt.

4. Verfahren nach Anspruch 3, **dadurch gekennzeichnet, dass** während der Aufheizphase (τ_{H}) und/oder der Magerphase (τ_{M}) die Beaufschlagung des Katalysatorsystems (14, 16) mit einem Lambda von 1,01 bis 1,07, insbesondere von 1,01 bis 1,03, erfolgt.

5. Verfahren nach einem der Ansprüche 1 bis 4, **dadurch gekennzeichnet, dass** für die Beendigung der Magerphase (τ_{M}) ein fester Zeitraum nach Motorstart oder nach Beendigung der Aufheizphase vorgebbar ist.

6. Verfahren nach einem der Ansprüche 1 bis 4, **dadurch gekennzeichnet, dass** ein kumulierter Wärmestromeintrag (W) in das Katalysatorsystem (14, 16) ermittelt wird und die Beendigung der Magerphase (τ_{M}) bei Überschreiten einer vorgebbaren Wärmestromschwelle (W_{S}) erfolgt.

7. Verfahren nach einem der Ansprüche 1 bis 4, **dadurch gekennzeichnet, dass** die Temperatur (T_{HK}) des Hauptkatalysators gemessen und/oder anhand von Betriebsparametern der Verbrennungskraftmaschine (10) modelliert wird und die der Magerphase (τ_{M}) bei Überschreiten einer vorgebbaren Temperaturschwelle (T_{S}) beendet wird.

8. Verfahren nach einem der vorhergehenden Ansprüche, **dadurch gekennzeichnet, dass** die Magerphase (τ_{M}) um eine vorgebbare Zeitspanne vor Erreichen der Anspringtemperatur bei Lambda = 1 (LO_{λ=1}) durch den Hauptkatalysator (16) beendet wird.

9. Verfahren nach einem der vorhergehenden Ansprüche, **dadurch gekennzeichnet, dass** die motorischen Maßnahmen zur Anhebung der Abgastemperatur in der Aufheizphase (τ_{H}) eine Spätzündung und/oder eine Verringerung einer Abgasrückführrate umfassen.

10. Verfahren nach einem der vorhergehenden Ansprüche, **dadurch gekennzeichnet, dass** während der Magerphase (τ_{M}) die Abgasrückführrate (AGR-Rate) angehoben wird.

11. Verfahren nach Anspruch 10, **dadurch gekennzeichnet, dass** während der Magerphase (τ_{M}) die AGR-Rate um einen Faktor 1,1 bis 2,5, insbesondere um einen Faktor 1,3 bis 1,6, angehoben wird.

12. Verfahren nach Anspruch 10 oder 11, **dadurch gekennzeichnet, dass** eine maximale Anhebung der AGR-Rate in Abhängigkeit von einer Laufruhe oder Laufunruhe des Motors erfolgt.

13. Verfahren nach einem der Ansprüche 10 bis 12, **dadurch gekennzeichnet, dass** bei Unterschreiten einer minimalen Schwelle der AGR-Rate während der Magerphase (τ_{M}) die Magerphase beendet wird.

14. Verfahren nach einem der Ansprüche 10 bis 13, **dadurch gekennzeichnet, dass** bei Unterschreiten einer vorgebbaren Laufruheschwelle beziehungsweise Überschreiten einer vorgebbaren Laufunruheschwelle die Magerphase (τ_{M}) nicht zugelassen oder beendet wird.

15. Verfahren nach einem der vorhergehenden Ansprüche, **dadurch gekennzeichnet, dass** in der Magerphase (τ_{M}) die Beaufschlagung des Katalysatorsystems (14, 16) mit einer mageren Abgasatmosphäre unterdrückt wird, wenn eine Motorlast und/oder eine Motordrehzahl eine vorgebbare Schwelle unterschreitet.

16. Verfahren nach einem der vorhergehenden Ansprüche, **dadurch gekennzeichnet, dass** der Hauptkatalysator (16) ein 3-Wege-Katalysator oder ein NOₓ-Speicherkatalysator ist.

17. Verfahren nach Anspruch 2, **dadurch gekennzeichnet, dass** die Phase (τ_{S}) beendet wird, wenn der Hauptkatalysator (16) eine Temperatur (T_{HK}) von 170 bis 300 °C, insbesondere von 220 bis 270 °C, erreicht hat.

## Claims

1. Method for controlling the warm-up process of a catalytic converter system (14, 16) connected downstream of an internal combustion engine (10), the catalytic converter system (14, 16) comprising at least a pre-catalytic converter (14) and a main catalytic converter (16) connected downstream thereof, wherein
(a) in a heat-up phase (τ_{H}), active catalytic converter heating is carried out by raising an exhaust gas temperature by means of engine-related measures with subjection of the catalytic converter system (14, 16) to a lean exhaust gas atmosphere with lambda > 1 until a temperature (T_{VK}) of the pre-catalytic converter (14) has reached at least approximately a starting temperature at lambda = 1 (LO_{λ=1}), and
(b) in a lean phase (τ_{M}), subjection of the catalytic converter system (14, 16) to a lean exhaust gas atmosphere with lambda > 1 is carried out until a temperature (T_{HK}) of the main catalytic converter (16) has reached at least approximately the starting temperature at lambda = 1 (LO_{λ=1}).

2. Method according to Claim 1, **characterized in that** in a phase (τ_{S}) directly following starting of the engine or the heat-up phase (τ_{H}) the catalytic converter system (14, 16) is subjected to a stoichiometric exhaust gas atmosphere with lambda = 1 until the main catalytic converter (16) has reached at least approximately a starting temperature at lambda > 1 (LO_{λ>1}).

3. Method according to Claim 1 or 2, **characterized in that** during the heat-up phase (τ_{H}) and/or the lean phase (τ_{M}) the catalytic converter system (14, 16) is subjected to a lambda from 1.005 to 1.2.

4. Method according to Claim 3, **characterized in that** during the heat-up phase (τ_{H}) and/or the lean phase (τ_{M}) the catalytic converter system (14, 16) is subjected to a lambda from 1.01 to 1.07, in particular from 1.01 to 1.03.

5. Method according to any one of Claims 1 to 4, **characterized in that** for ending the lean phase (τ_{M}) a fixed time interval after engine start or after ending of the heat-up phase is predefinable.

6. Method according to any one of Claims 1 to 4, **characterized in that** a cumulated heat-flow transfer (W) into the catalytic converter system (14, 16) is determined and the lean phase (τ_{M}) is ended upon exceeding of a predefinable heat-flow threshold (W_{S}).

7. Method according to any one of Claims 1 to 4, **characterized in that** the temperature (T_{HK}) of the main catalytic converter is measured and/or modelled on the basis of operating parameters of the internal combustion engine (10) and the lean phase (τ_{M}) is ended upon exceeding of a predefinable temperature threshold (T_{S}).

8. Method according to any one of the preceding claims, **characterized in that** the lean phase (τ_{M}) is ended by a predefinable time interval before attainment by the main catalytic converter (16) of the starting temperature at lambda = 1 (LO_{λ=1}) .

9. Method according to any one of the preceding claims, **characterized in that** the engine-related measures for raising the exhaust gas temperature in the heat-up phase (τ_{H}) include retarded ignition and/or reduction of an exhaust gas recirculation rate.

10. Method according to any one of the preceding claims, **characterized in that** during the lean phase (τ_{M}) the exhaust gas recirculation (EGR) rate is increased.

11. Method according to Claim 10, **characterized in that** during the lean phase (τ_{M}) the EGR rate is increased by a factor of 1.1 to 2.5, in particular by a factor of 1.3 to 1.6.

12. Method according to Claim 10 or 11, **characterized in that** a maximum increase of the EGR rate takes place in dependence on a running smoothness or running roughness of the engine.

13. Method according to any one of Claims 10 to 12, **characterized in that** the lean phase is ended when the EGR rate falls below a minimum threshold during the lean phase (τ_{M}).

14. Method according to any one of Claims 10 to 13, **characterized in that** upon non-attainment of a predefinable running smoothness threshold or upon exceeding of a predefinable running roughness threshold the lean phase (τ_{M}) is not permitted or is ended.

15. Method according to any one of the preceding claims, **characterized in that** in the lean phase (τ_{M}) subjection of the catalytic converter system (14, 16) to a lean exhaust gas atmosphere is suppressed if an engine load and/or an engine speed falls below a predefinable threshold.

16. Method according to any one of the preceding claims, **characterized in that** the main catalytic converter (16) is a three-way catalytic converter or an NOₓ storage catalytic converter.

17. Method according to Claim 2, **characterized in that** the phase (τ_{S}) is ended when the main catalytic converter (16) has reached a temperature (T_{HK}) from 170 to 300°C, in particular from 220 to 270°C.

## Revendications

1. Procédé permettant de commander l'opération de chauffage d'un système catalytique (14, 16) installé en aval d'un moteur à combustion interne (10), composé au moins d'un précatalyseur (14) et d'un catalyseur principal (16) en aval de celui-ci, dans lequel
(a) dans une phase de chauffage (τ_{H}), on effectue un chauffage actif du catalyseur par l'élévation d'une température des gaz d'échappement au moyen de mesures agissant sur le moteur dans le cas d'une alimentation du système de catalyseur (14, 16) avec une atmosphère de gaz d'échappement pauvre avec lambda > 1, jusqu'à ce qu'une température (T_{VK}) du précatalyseur (14) ait atteint au moins approximativement une température de démarrage pour lambda = 1 (LO_{λ=1}), et
(b) dans une phase pauvre (τ_{M}), on effectue une alimentation du système de catalyseur (14, 16) avec une atmosphère de gaz d'échappement pauvre avec lambda > 1, jusqu'à ce qu'une température (T_{HK}) du catalyseur principal (16) ait atteint au moins approximativement la température de démarrage pour lambda = 1 (LO_{λ=1}).

2. Procédé selon la revendication 1, **caractérisé en ce que**, dans une phase (τ_{S}) succédant au démarrage du moteur ou à la phase de chauffage (τ_{H}), on alimente le système de catalyseur (14, 16) avec une atmosphère de gaz d'échappement stoechiométrique avec lambda = 1, jusqu'à ce que le catalyseur principal (16) ait atteint au moins approximativement une température de démarrage pour lambda > 1 (LO_{λ>1}).

3. Procédé selon la revendication 1 ou 2, **caractérisé en ce que**, pendant la phase de chauffage (τ_{H}) et/ou pendant la phase pauvre (τ_{M}), on effectue l'alimentation du système de catalyseur (14, 16) avec un lambda de 1,005 à 1,2.

4. Procédé selon la revendication 3, **caractérisé en ce que**, pendant la phase de chauffage (τ_{H}) et/ou la phase pauvre (τ_{M}), on effectue l'alimentation du système de catalyseur (14, 16) avec un lambda de 1,01 à 1,07, en particulier de 1,01 à 1,03.

5. Procédé selon l'une quelconque des revendications 1 à 4, **caractérisé en ce qu'**une durée fixe peut être prédéterminée pour la fin de la phase pauvre (τ_{M}) après le démarrage du moteur ou après la fin de la phase de chauffage.

6. Procédé selon l'une quelconque des revendications 1 à 4, **caractérisé en ce que** l'on détermine un apport de flux de chaleur cumulé (W) dans le système de catalyseur (14, 16) et on met fin à la phase pauvre (τ_{M}) en cas de dépassement d'un seuil de flux de chaleur (W_{S}) prédéterminable.

7. Procédé selon l'une quelconque des revendications 1 à 4, **caractérisé en ce que** l'on mesure la température (T_{HK}) du catalyseur principal et/ou on la modélise à l'aide de paramètres de fonctionnement du moteur à combustion interne (10), et on met fin à la phase pauvre (τ_{M}) en cas de dépassement d'un seuil de température (T_{S}) prédéterminable.

8. Procédé selon l'une quelconque des revendications précédentes, **caractérisé en ce que** l'on met fin à la phase pauvre (τ_{M}) à un laps de temps prédéterminable avant que le catalyseur principal (16) atteigne la température de démarrage pour lambda = 1 (LO_{λ=1}).

9. Procédé selon l'une quelconque des revendications précédentes, **caractérisé en ce que** les mesures agissant sur le moteur pour l'élévation de la température des gaz d'échappement dans la phase de chauffage (τ_{H}) comprennent un allumage tardif et/ou une diminution d'un taux de recyclage des gaz d'échappement.

10. Procédé selon l'une quelconque des revendications précédentes, **caractérisé en ce que** l'on augmente le taux de recyclage des gaz d'échappement (taux AGR) pendant la phase pauvre (τ_{M}).

11. Procédé selon la revendication 10, **caractérisé en ce que** l'on augmente le taux AGR d'un facteur 1, 1 à 2,5, en particulier d'un facteur 1,3 à 1,6, pendant la phase pauvre (τ_{M}).

12. Procédé selon la revendication 10 ou 11, **caractérisé en ce que** l'on effectue une élévation maximale du taux AGR en fonction du fonctionnement silencieux ou du fonctionnement non silencieux du moteur.

13. Procédé selon l'une quelconque des revendications 10 à 12, **caractérisé en ce que** l'on met fin à la phase pauvre en cas de descente en dessous d'un seuil minimal du taux AGR pendant la phase pauvre (τ_{M}).

14. Procédé selon l'une quelconque des revendications 10 à 13, **caractérisé en ce que** l'on n'autorise pas la phase pauvre (τ_{M}) ou on y met fin en cas de descente en dessous d'un seuil de fonctionnement silencieux prédéterminable ou de dépassement d'un seuil de fonctionnement non silencieux prédéterminable.

15. Procédé selon l'une quelconque des revendications précédentes, **caractérisé en ce que**, dans la phase pauvre (τ_{M}), on supprime l'alimentation du système de catalyseur (14, 16) avec une atmosphère de gaz d'échappement pauvre, lorsqu'une charge du moteur et/ou une vitesse de rotation du moteur descend en dessous d'un seuil prédéterminable.

16. Procédé selon l'une quelconque des revendications précédentes, **caractérisé en ce que** le catalyseur principal (16) est un catalyseur à 3 voies ou un catalyseur accumulateur de NOₓ.

17. Procédé selon la revendication 2, **caractérisé en ce que** l'on met fin à la phase (τ_{S}) lorsque le catalyseur principal (16) a atteint une température (T_{HK}) de 170 à 300°C, en particulier de 220 à 270 °C.
